(19) Europäisches Patentamt
European Patent Office
Office européen des brevets

(11) Veröffentlichungsnummer: **0 337 261**
**A2**

(12) # EUROPÄISCHE PATENTANMELDUNG

(21) Anmeldenummer: **89105922.2**

(51) Int. Cl.4: **B29C 67/14 , B32B 27/08**

(22) Anmeldetag: **05.04.89**

(30) Priorität: **14.04.88 DE 3812323**

(43) Veröffentlichungstag der Anmeldung:
**18.10.89 Patentblatt 89/42**

(84) Benannte Vertragsstaaten:
**CH DE ES FR GB IT LI NL**

(71) Anmelder: **BASF Aktiengesellschaft**
**Carl-Bosch-Strasse 38**
**D-6700 Ludwigshafen(DE)**

(72) Erfinder: **Stutz, Herbert, Dr.**
**Im Eichbaeumle 98**
**D-7500 Karlsruhe 1(DE)**
Erfinder: **Tesch, Helmut, Dr.**
**Goethestrasse 12**
**D-6701 Birkenheide(DE)**
Erfinder: **Linden, Gerd, Dr.**
**Brunnengasse 18**
**D-6900 Heidelberg(DE)**
Erfinder: **Altstaedt, Volker, Dr.**
**Marienbaderstrasse 2**
**D-6084 Gernsheim(DE)**
Erfinder: **Heckmann, Walter, Dr.**
**Geiersbergstrasse 2**
**D-6940 Weinheim(DE)**

(54) **Faserverbundwerkstoffe.**

(57) Die Erfindung betrifft Faserverbundwerkstoffe aus Prepregschichten, die durch Zwischenschichten miteinander verbunden sind. Die Prepregschichten bestehen aus mit härtbaren Harzen imprägnierten Fasergelegen. Die Zwischenschichten enthalten Bereiche aus elastischen Polymerfilmen, die 10 bis 90 % der Oberfläche der Prepregschichten bedecken. Die Polymerfilme werden als wäßrige Dispersion auf die Prepregschichten aufgebracht, nach dem Entfernen des Wassers werden die Schichten verpreßt. Die Verbundwerkstoffe sind als Bauteile für die Luft- und Raumfahrt sowie in der Automobilindustrie geeignet.

EP 0 337 261 A2

Xerox Copy Centre

# Faserverbundwerkstoffe

Die Erfindung betrifft Faserverbundwerkstoffe mit verbesserter Bruchzähigkeit und Druckfestigkeit

Prepregs aus faserverstärkten härtbaren Harzen werden in steigendem Maße zur Herstellung temperaturbeständiger hochbeanspruchbarer flächiger Bauteile eingesetzt. Diese Bauteile werden durch Verpressen mehrerer Lagen von Prepregs und Aushärten der Harze hergestellt. Zur Verbesserung der Bruchzähigkeit der Verbundwerkstoffe wird nach EP-A 156 148 vorgeschlagen, zwischen den Prepregschichten Zwischenschichten aus kautschukmodifizierten Epoxidharzen mit Fasermatten als Trägermaterial einzulagern. Damit lassen sich Bruchzähigkeit und Schadenstoleranz der Bauteile zwar deutlich verbessern, durch die durchgehend elastische Zwischenschicht (in der nach der Aushärtung vernetzte Kautschukpartikel gleichmäßig verteilt sind) werden jedoch die Wärmeformbeständigkeit und die Druckfestigkeit der Bauteile verschlechtert.

In EP-A 252 725 sind schadenstolerante Verbundwerkstoffe beschrieben auf Basis eines Epoxidharzes, welches unschmelzbare und auch nicht agglomerierbare Partikel aus einem vernetzten (bzw. während der Prepregherstellung vernetzenden) kautschukartigen Polymeren mit einem mittleren Teilchendurchmesser von 10-75 µm dispergiert enthält. Bei der Prepregherstellung werden diese Kautschukpartikel an der Oberfläche angereichert und bilden eine Zwischenschicht im Verbundwerkstoff. Damit lassen sich zwar Verbundwerkstoffe mit hoher Wärmeformbeständigkeit und verbesserter Schadenstoleranz herstellen, die Reproduzierbarkeit ist aber problematisch, da der Anteil der an die Prepregoberfläche wandernden Partikel nur schwer zu kontrollieren ist.

Der Erfindung lag also die Aufgabe zugrunde, Faserverbundwerkstoffe bereitzustellen, die zu flächigen Bauteilen mit hoher Bruchzähigkeit, Druckfestigkeit und Wärmeformbeständigkeit ausgehärtet werden können, und die einfach auf reproduzierbare Art und Weise herstellbar sind.

Diese Aufgabe wird durch die erfindungsgemäßen Faserverbundwerkstoffe gelöst.

Gegenstand der Erfindung ist demzufolge ein Faserverbundwerkstoff, enthaltend mehrere Lagen von Prepregschichten, die aus mit härtbaren Harzen A imprägnierten Fasergelegen bestehen, wobei die Prepregschichten durch Zwischenschichten miteinander verbunden sind, welche Bereiche aus elastischen Polymerfilmen enthalten. Die Polymerfilme sind dadurch gekennzeichnet, daß sie

a. 10 bis 90 % der Oberfläche der Prepregschicht bedecken,

b. in einer Menge von 0,1 bis 20 g pro $m^2$ der Prepregschicht vorliegen, und

c. aus einem schmelzbaren oder wenigstens versinterbaren organischen Polymeren B mit einer Glastemperatur von höchstens 25 °C bestehen.

Ein weiterer Gegenstand der Erfindung ist ein Verfahren zur Herstellung von Faserverbundwerkstoffen durch Verpressen von Prepregschichten aus mit härtbaren Harzen A imprägnierten Fasergelegen, bei dem man auf die Prepregschichten eine wäßrige Dispersion von Partikeln eines organischen Polymeren B mit einer Glastemperatur von höchstens 25 °C in einer Menge von 1 bis 25 Gew.% Polymer B, bezogen auf Harz A, so aufbringt, daß 10 bis 90 % der Oberfläche der Prepregschicht vorzugsweise gleichmäßig mit der Dispersion bedeckt ist, das Wasser verdunstet oder verdampft, wobei sich ein elastischer Polymerfilm ausbildet, die Schichten miteinander verpreßt und bei erhöhter Temperatur aushärtet.

In US 3 808 088 ist ein Verfahren zum Verbinden von Substratschichten beschrieben, bei dem diskrete Tropfen eines Polyacrylat-Latex auf ein Substrat gesprüht und mehrere Schichten dann miteinander verpreßt werden. Als Substrate sind Textilien, Schaumstoffe sowie Gewebe aus den verschiedensten Fasern, u.a. auch aus Glasfasern genannt, nicht aber Fasergelege, die mit härtbaren Harzen imprägniert sind. Nur bei solchen kann beim Verpressen Harz in die Lücken der Zwischenschicht auswandern und nach dem Härten eine hohe Druckfestigkeit des Faserverbundwerkstoffs bewirken. Im Gegensatz zu den erfindungsgemäßen festen und steifen Faserverbundwerkstoffen sind die Laminate nach US 3 808 088 flexibel.

In US 4 329 387 sind Prepregs aus harzgetränkten Fasergelegen beschrieben, die zur Verbesserung des Tacks mit einer unzusammenhängenden Zwischenschicht aus zusätzlichem Harz versehen sind. Diese Zwischenschicht besteht vorzugsweise aus dem gleichen Harz wie das zum Imprägnieren verwendete, damit im ausgehärteten Werkstoff keine Inhomogenitäten auftreten.

Die Prepregschichten haben im allgemeinen eine Dicke von 0,1 bis 2 mm. Sie bestehen aus mit härtbaren Harzen A imprägnierten Fasergelegen. Alle üblichen härtbaren Harze kommen in Frage; vorzugsweise Epoxidharze, Imidharze, Cyanatharze, Vinylesterharze und ungesättigte Polyesterharze.

Geeignete Epoxidharze sind Umsetzungsprodukte von Epichlorhydrin mit Alkoholen, Phenolen, Carbonsäuren, Aminen oder Aminophenolen mit im Mittel zwei oder mehr Epoxidgruppen im Molekül.

Gegebenenfalls können auch Verbindungen mit nur einer Epoxidgruppe im Molekül in geringen Mengen mitverwendet werden. Bevorzugt sind Epoxidharze auf Basis von mehrwertigen Phenolen, z.B. von Bisphenol A oder von Novolaken. Die Epoxidharze enthalten die üblichen Härter, z.B. Diamine, Säureanhydride, Hydrazide, sowie gegebenenfalls Beschleuniger und andere Zusatzstoffe.

Imidharze sind Mischungen oder Präpolymere aus Bismaleinimiden und Comonomeren sowie oligomere Polyimide mit polymerisierbaren Endgruppen, wie z.B. Acetylen- oder Nadicsäure-Endgruppen.

Geeignete Bismaleinimide sind solche der allgemeinen Formel

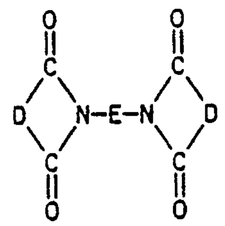 ,

in der D eine gegebenenfalls substituierte Kohlenstoffdoppelbindung ist und E ein zweiwertiger Rest mit zumindest zwei Kohlenstoffatomen bedeutet. Neben Bismaleinimiden sind grundsätzlich auch Polymaleinimide, sowie Mischungen verschiedener Bismaleinimide geeignet. Bevorzugte Bismaleinimide sind 4,4′-Bismaleinimidodiphenylmethan, 4,4′-Bismaleinimidodiphenylether, 3,3′-Bismaleinimidodiphenylsulfon, 2,4-Bismaleinimidotoluol, 1,6-Bismaleinimidotoluol, 1,6-Bismaleinimidohexan und 2,2,4-Trimethyl-1,6-bismaleinimidohexan. Es können auch bis zu 20 Gew.% eines Monoimids enthalten sein. Geeignete Comonomere sind Polyamine, Polyphenole, Alkenylphenole oder -phenolether, Aminophenole, Vinyl- und Allylverbindungen.

Vinylesterharze besitzen die charakteristische Gruppierung $-CO-OCH_2CHOH-CH_2O-$ und enthalten endständige polymerisierbare ungesättigte Gruppen. Die Vinylesterharze werden hergestellt durch Umsetzung von etwa stöchiometrischen Mengen eines Polyepoxidharzes und einer ungesättigten Monocarbonsäure, beispielsweise Methacrylsäure.

Cyanatharze sind polyfunktionelle aromatische Cyansäureester und deren Trimersierungsprodukte. Sie entsprechen der allgemeinen Formel $R(O-C\equiv N)_n$, worin n eine ganze Zahl von vorzugsweise 2 und R ein n-wertiger aromatischer Rest ist. Sie können in untergeordneten Mengen monofunktionelle Cyansäureester enthalten.

Die vorgenannten Harze können auch in beliebigen Mengenverhältnissen untereinander kombiniert werden, sie können durch inerte oder reaktive Oligomere oder Polymere zäh modifiziert werden, wie z.B. durch niedermolekulare Kautschuke mit endständigen Carboxyl-, Hydroxyl- oder Aminogruppen oder entsprechenden Oligomeren oder Polymeren von aromatischen Polyethern, Polythioethern, Polyester, Polysulfonen, Polyethersulfonen oder Polyetherketonen. Auch entsprechende Blockcopolymere sind geeignet.

Die Prepregschichten enthalten Verstärkungsfasern, vorzugsweise in Mengen von 40 bis 85 Vol %.

Als Verstärkungsfasern kommen die üblichen Fasern aus Glas, Kohlenstoff, keramischem Material und aromatischem Polyamid in Frage. Sie können entweder als Bänder vorliegen, die aus einer Vielzahl von parallelen Rovings bestehen, oder als Bahnen, z.B. in Form von Matten, Vliesen, Geweben oder Gewirken.

Die Zwischenschichten haben im allgemeinen eine Dicke von 0,5 bis 100 µm. Sie enthalten Bereiche elastischer Polymerfilme. Diese liegen in einer Menge von 0,1 bis 20, vorzugsweise von 0,5 bis 15 g, pro $m^2$ der Prepregschicht vor und bestehen aus einem schmelzbaren oder wenigstens versinterbaren organischen Polymeren B, mit einer Glastemperatur von höchstens 25 °C, vorzugsweise von weniger als 0 °C. Sie sind bevorzugt linear, können aber auch schwach vernetzt sein, sollten dann aber zumindest in der Wärme filmbildende Eigenschaften aufweisen.

Geeignete organische Polymere B sind Homo- oder Copolymere von ethylenisch ungesättigten Verbindungen, wie z.B. Ethylen, Propylen, Isobutylen, Butadien, Isopren, Vinylester von Alkylencarbonsäuren mit bis zu 8 C-Atomen, (Meth)-Acrylsäure oder deren Ester oder Nitrile. Geeignet sind ferner Polysiloxane, Polyurethane, Polyether, Polyester oder Polyacetale, sofern sie die oben genannten Bedingungen erfüllen.

Bevorzugt sind Dienkautschuke und Acrylpolymerisate, sowie Polyurethane.

Die Polymerfilme bedecken 10 bis 90, vorzugsweise 20 bis 80% der Oberfläche der Prepregschicht; sie stellen eine Verbindung zwischen diesen Prepregschichten her. Die durch die Polymerfilme gebildeten Bereiche können streifenförmig, rasterförmig oder unregelmäßig ausgebildet sein. Punktförmige Bereiche sollten einen mittleren Durchmesser von mindestens 200 µm, vorzugsweise von mindestens 1 000 µm aufweisen.

Außer dem elastischen Polymerfilm kann die Zwischenschicht auch noch Bereiche aus dem härtbaren Harz A enthalten. Dieses bedeckt dann den verbleibenden Rest der Oberfläche der Prepregschicht. Im ausgehärteten Zustand bewirken diese Harzbereiche eine Verbesserung der Druckfestigkeit des Verbundwerkstoffs.

Bei der bevorzugten Herstellung der erfindungsgemäßen Faserverbundwerkstoffe wird auf die Prepregschichten eine wäßrige, vorzugsweise 30 bis 60 Gew.%ige Dispersion von Partikeln des organischen Polymeren B aufgetragen. Die Partikelgröße liegt bevorzugt zwischen 0,05 und 5 $\mu$m. Die Dispersion kann übliche Emulgatoren enthalten, z.B. Alkylsulfonate oder -carboxylate, ethoxylierte Alkylphenole, Polyethylenoxid und Ethylenoxid-Propylenoxid-Blockcopolymere. Die Menge wird dabei so bemessen, daß im Faserverbundwerkstoff 1 bis 25, vorzugsweise 2 bis 15 Gew.% Polymeres B, bezogen auf das Harz A vorliegt. Dabei kann man entweder direkt die Prepregoberfläche mit der Dispersion besprühen, bestreichen oder bedrucken oder man kann bei der Prepregherstellung auf das silikonisierte Träger-Papier, auf dem Harz und Fasern abgelegt werden, die Dispersion aufbringen. Schließlich kann die Dispersion auch auf die Deckfilme aufgebracht werden, mit denen die einzelnen Prepregschichten bei der Lagerung abgedeckt sind. Vor dem Zusammenführen der Prepregschichten werden gegebenenfalls Trägerpapier und Deckfolie entfernt und das Wasser wird aus der Dispersion durch Verdampfen oder Verdunsten entfernt, vorzugsweise bei Temperaturen bis zu 100° C, insbesondere zwischen 25 und 80° C.

Dabei verfließen infolge ihrer niedrigen Glastemperatur die Partikel des schmelzbaren bzw. versinterbaren Polymeren B zu einem elastischen Polymerfilm. Die derart beschichteten Prepregschichten können in dieser Form gelagert werden. Zur Herstellung der erfindungsgemäßen Faserverbundwerkstoffe werden mehrere beschichtete Prepregschichten, in beliebiger Anzahl, übereinandergestapelt, wobei je nach der späteren Belastung des Verbundwerkstoffs verschiedene Faserorientierungen gewählt werden können. Die Gelege werden dann, vorzugsweise bei Temperaturen zwischen 100 und 150° C, einige Minuten bis mehrere Stunden lang zweckmäßigerweise in Autoklaven unter Vakuum, miteinander verpreßt. Dabei wird die Luft, sowie ggf. überschüssiges Harz A ausgequetscht. Wesentlich ist, daß dabei Harz A in die Bereiche der Zwischenschicht, die nicht mit dem elastischen Polymerfilm belegt ist, auswandern kann. Nach der Härtung verleihen diese Bereiche gehärteten Harzes dem Faserverbundwerkstoff eine gute Druckfestigkeit.

Die Härtung wird anschließend unter üblichen Bedingungen, vorzugsweise bei Temperaturen zwischen 100 und 350° C (je nach der Art des Harzes A) durchgeführt.

Die erfindungsgemäßen Verbundwerkstoffe eignen sich hervorragend für hochbelastbare, temperaturbeständige Bauteile für die Luft- und Raumfahrt sowie in der Automobilindustrie.

## Beispiele

### Prepregherstellung

Eine Anzahl von parallelen Kohlenstoffaser-Rovings entsprechend dem angestrebten Faserflächengewicht wurden mittels eines Kamms kollimiert und zwischen einem Kalanderpaar mit dem Harz A imprägniert. Das Harz wurde unterhalb der Fasern als Film zugeführt, der auf einem Trennpapier aufgebracht war. Nach dem Einkalandrieren der Fasern in den Film wurde das Prepreg mit einer Schutzfolie versehen und aufgewickelt.

### Oberflächenbehandlung des Prepregs mit der Polymerdispersion

Nach Entfernung der Schutzfolie wurde auf dem offen geführten Prepreg eine wäßrige Polymerdispersion aufgebracht und durch einen nachgeschalteten Luftstrom getrocknet. Die gewünschten Auftragsmengen und Flächenbelegungen können dabei über die Konzentration der Dispersion, den Spritzdruck und die Vorschubgeschwindigkeit des Prepregs nach Belieben eingestellt werden. Die aufgebrachte Dispersion wird dann in einem Warmluftstrom getrocknet. Das so oberflächenbehandelte Prepreg wurde zur Lagerung und Weiterverarbeitung wieder mit einer Polyethylen-Schutzfolie versehen und aufgewickelt.

### Probekörperherstellung und Prüfung

Aus dem Prepreg wurde ein $[O]_{16}$-, sowie ein $[O]_{24}$-Laminat mit den Abmessungen 300 x 300 hergestellt. Die Zuschnitte wurden mit der jeweils unbehandelten Seite auf der behandelten Seite der vorherigen Lage abgelegt. In das $[O]_{24}$-Laminat wurde zwischen die 12. und 13. Lage eine 20 $\mu$m dicke, 300 mm breite und 30 mm lange PTFE-Folie (30 x 300 mm$^2$) in Faserrichtung als Rißstarter eingelegt. Die nominelle Prepregdicke betrug 0,125 mm. Die Laminate wurden im Autoklaven 30 Minuten bei 130° C und 2 Stunden bei 180° C mit einem Druck von 7 Bar im Vakuumsack ausgehärtet. Der Faservolumengehalt der Laminate betrug 60 %.

Aus dem ausgehärteten $[O]_{16}$-Laminat wurden 10 Druck-Probekörper nach DIN 29971 mechanisch herausgearbeitet. Die Prüfung erfolgte nach DIN 29971 auf einer amtlich geeichten Spindelzugprüfmaschine bei Raumtemperatur im Normklima.

Zur Bestimmung der interlaminaren Rißzähigkeit wurden aus dem $[O]_{24}$-Laminat 6 Double Cantilever Beam Probekörper in Faserrichtung mit den

Abmessungen 230 mm x 38 mm mechanisch herausgearbeitet. Die Länge der Rißstarterkerbe betrug 20 mm. Oberhalb der Rißstarterkerbe wurde auf beiden Flachseiten ein reibungsfreies Scharnier aufgeklebt. Auf der Schmalseite des Probekörpers wurden beginnend am Ende der Rißstarterkerbe 5 Segmente von 25 mm Länge markiert. Die Prüfung erfolgt mit einer amtlich geeichten Spindelzugprüfmaschine bei einer gleichmäßigen Abzugsgeschwindigkeit von 10 mm/min bei Raumtemperatur im Normklima. Die Rißöffnung wurde induktiv in der Krafteinleitungsebene gemessen und der Kraft-Rißöffnungsverlauf kontinuierlich erfaßt. Die Rißfortpflanzung wurde mit einem Vergrößerungsglas verfolgt und jeweils nach dem Passieren des Rißes an einer Segmentlinie, der Zeitpunkt im Kraft-Rißöffnungsverlauf markiert. Die Bestimmung der interlaminaren Rißzähigkeit $G_{IC}$ erfolgte nach der NASA "Reference Publication" 1092.

Beispiel 1

Nach dem vorstehend beschriebenen Verfahren wurde ein Prepreg aus der Kohlenstoffaser T800-12K-40B der Firma TORAY und einem handelsüblichen Bismaleinimid-Harz (Rigidite 5245C der BASF Structural Materials Inc. hergestellt. Das Faserflächengewicht betrug dabei 135 g/m$^2$, das fertige Prepregs wies einen Harzgehalt von 33 Gew.% auf.

Zur Oberflächenbehandlung wurde eine aus einem aliphatischen Polyesterdiol hergestellte, 40 gew.%ige Polyurethan-Dispersion eingesetzt (Astacinfinish PUD der BASF AG). Der Auftrag der Dispersion erfolgte durch Aufsprühen aus Spritzdüsen, wobei unregelmäßig ausgebildete, punktförmige Bereiche mit einem mittleren Durchmesser von 2-3 mm aufgebracht wurde. Die Auftragsmenge betrug nach dem Trocknen 15 g/m$^2$, wobei etwa 70 % der Prepregoberfläche bedeckt waren. Das PUR weist als getrockneter Film eine Glastemperatur von -20 °C auf. Die Menge an PUR, bezogen auf das Harz A, betrug 22 Gew.%.

An dem aus dem erfindungsgemäß modifizierten Prepreg hergestellten Laminat wurde eine Rißzähigkeit $G_{IC}$ von 900 J/m$^2$ gemessen, die Druckfestigkeit lag bei 1500 N/mm$^2$.

Vergleichsversuch 1 a

Das in Beispiel 1 hergestellte Prepreg wurde ohne Oberflächenmodifizierung eingesetzt, die Rißzähigkeit des so erhaltenen Laminats lag bei 500 J/m$^2$, die Druckfestigkeit ebenfalls bei 1500 N/mm$^2$.

Durch die erfindungsgemäße Oberflächenbehandlung wird somit die Rißzähigkeit des Laminats fast verdoppelt, ohne daß die Druckfestigkeit beeinträchtigt wird.

Beispiel 2

Entsprechend dem Beispiel 1 wurde ein Laminat aus den gleichen Komponenten hergestellt, wobei aber die Dispersion auf einen Film mit einem Flächengewicht von 10 g/m$^2$ an dem gleichen Bismaleinimid-Harz aufgebracht wurde, der dann auf das Prepreg aufkalandriert wurde. Die Auftragsmenge der Dispersion betrug 6 g/m$^2$, die Flächenbelegung 20 %.

Die Rißzähigkeit des Laminats betrug in diesem Fall 650 J/m$^2$, die Druckfestigkeit 1500 N/mm$^2$.

Beispiel 3

Entsprechend dem Beispiel 1 wurde ein Prepreg mit den gleichen Komponenten hergestellt. Zur Oberflächenbehandlung wurde eine nach dem Beispiel 1 der EP-PS 103 174 hergestellte PUR-Dispersion eingesetzt, welche leicht vernetzte Teilchen aufweist. Die Auftragsmenge an PUR in getrockneten Zustand beträgt 10 g/m$^2$, die Flächenbelegung 50 %.

Die Rißzähigkeit der daraus hergestellten Laminate beträgt 720 J/m$^2$, die Druckfestigkeit 1420 N/mm$^2$.

Beispiel 4

Entsprechend dem Beispiel 1 wurde ein Prepreg aus Kohlenstoff-Fasern T300-6K-50B mit dem gleichen Harz hergestellt. In diesem Fall wurde eine 50 gew.%ige Polymerisatdispersion aus 97 % Butylacrylat und 3 % Acrylsäure eingesetzt, welche in trockenem Zustand einen weichen und leicht klebrigen Film mit einer Glastemperatur von -28 °C ergibt. Die Dispersion wurde auf den Prepreg mit einer Rasterwalze aufgebracht, die Auftragsmenge betrug 3 g/m$^2$, die Flächenbelegung 20 %; der Durchmesser der Rasterpunkte betrug 1 mm.

Das gehärtete Laminat weits eine Rißzähigkeit von 300 J/m$^2$ auf, die Druckfestigkeit lag bei 1400 N/mm$^2$.

Vergleichsversuch 4 a

Der Versuch aus Beispiel 4 wurde wiederholt, wobei auf die Oberflächenmodifizierung mit der Dispersion verzichtet wurde. Die Rißzähigkeit betrug in diesem Fall 225 J/m$^2$.

Beispiel 5

Ein Prepreg aus der Kohlenstoff-Faser T300-6K-50B und einem handelsüblichen Epoxid-Harz (Rigidite 5208) wurde mit einer 50 gew.%igen Dispersion aus einem Copolymerisat aus 70 % Butadien und 30 % Styrol behandelt. Dieses Polymerisat weist in trockenem Zustand eine Glastemperatur von -70° C auf. Der Auftrag erfolgt wieder über eine Rasterwalze mit einer Flächenbelegung von 60 %, die Auftragsmenge betrug 8 g Polymeres pro $m^2$, der Durchmesser der Rasterpunkte 1 mm.

Am gehärteten Laminat wurde eine Rißzähigkeit von 110 $J/m^2$ gemessen, die Druckfestigkeit betrug 1530 $N/mm^2$.

Vergleichsversuch 5 a

Der Versuch aus Beispiel 5 wurde ohne die Oberflächenbehandlung wiederholt, die Rißzähigkeit betrug in diesem Fall 75 $J/m^2$, die Druckfestigkeit 1480 $N/mm^2$.

Beispiel 6

Das Beispiel 1 wurde mit den gleichen Komponenten und Mengenverhältnissen wiederholt, nur mit dem Unterschied, daß die Dispersion zunächst auf ein Trennpapier aufgesprüht wurde, welches dann nach dem Trocknen mit einem Harzfilm beschichtet wurde. Auf den Harzfilm wurden anschließend die Fasern aufgelegt und einkalandriert. Die Menge des auf das Papier aufgebrachten Polyurethans betrug 12 $g/m^2$, das Prepreg wies einen Harzgehalt von 35 Gew.% auf.

Das so erhaltene Prepreg wurde, wie in Beispiel 1 beschrieben, weiterverarbeitet, das gehärtete Laminat wies eine Rißzähigkeit von 630 $J/m^2$ auf, die Druckfestigkeit betrug 1400 $N/mm^2$.

## Ansprüche

1. Faserverbundwerkstoff, enthaltend mehrere Lagen von Prepregschichten, die aus mit härtbaren Harzen A imprägnierten Fasergelegen bestehen, wobei die Prepregschichten durch Zwischenschichten miteinander verbunden sind, welche Bereiche aus elastischen Polymerfilmen enthalten, dadurch gekennzeichnet, daß die Polymerfilme

a. 10 bis 90 % der Oberfläche der Prepregschicht bedecken,

b. in einer Menge von 0,1 bis 20 g pro $m^2$ der Prepregschicht vorliegen, und

c. aus einem schmelzbaren oder wenigstens versinterbaren organischen Polymeren B mit einer Glastemperatur von höchstens 25° C bestehen.

2. Faserverbundwerkstoff nach Anspruch 1, dadurch gekennzeichnet, daß das härtbare Harz A ein Epoxidharz, ein Cyanatharz, ein Imidharz, ein Vinylesterharz, ein ungesättigtes Polyesterharz oder eine Mischung davon ist.

3. Faserverbundwerkstoff nach Anspruch 1, dadurch gekennzeichnet, daß die Prepregschicht 40 bis 85 Vol.% vorzugsweise gerichteter Verstärkungsfasern aus Kohlenstoff, Glas, aromatischem Polyamid oder keramischem Material enthält.

4. Faserverbundwerkstoff nach Anspruch 1, dadurch gekennzeichnet, daß die organischen Polymere B Dien-Kautschuke, Acrylpolymerisate oder Polyurethane sind.

5. Faserverbundwerkstoff nach Anspruch 1, dadurch gekennzeichnet, daß in der Zwischenschicht außer dem elastischen Polymerfilm Bereiche aus dem härtbaren Harz A enthalten sind.

6. Faserverbundwerkstoff nach Anspruch 1, dadurch gekennzeichnet, daß die Menge des Polymeren B 1 bis 25 Gew.%, bezogen auf das härtbare Harz A, beträgt.

7. Faserverbundwerkstoff nach Anspruch 1, dadurch gekennzeichnet, daß die Bereiche des elastischen Polymerfilms streifenförmig, rasterförmig oder unregelmäßig ausgebildet sind und Durchmesser von mindestens 200 µm, vorzugsweise von mindestens 1 000 µm aufweisen.

8. Verfahren zur Herstellung von Faserverbundwerkstoffen durch Verpressen von Prepregschichten aus mit härtbaren Harzen A imprägnierten Fasergelegen, dadurch gekennzeichnet, daß man auf die Prepregschichten eine wäßrige Dispersion von Partikeln eines organischen Polymeren B mit einer Glastemperatur von höchstens 25° C in einer Menge von 1 bis 25 Gew.% Polymer B, bezogen auf Harz A, so aufbringt, daß 10 bis 90 % der Oberfläche der Prepregschicht mit der Dispersion bedeckt sind, das Wasser verdunstet oder verdampft, wobei sich ein elastischer Polymerfilm ausbildet, die Schichten miteinander verpreßt und bei erhöhter Temperatur aushärtet.

9. Verwendung der Faserverbundwerkstoffe nach Anspruch 1 als Bauteile in der Luft- und Raumfahrt sowie in der Automobilindustrie oder für Sportgeräte.